# EUROPÄISCHE PATENTANMELDUNG

(11) **EP 3 819 212 A1**
(43) Veröffentlichungstag der Anmeldung: **12.05.2021**
(21) Anmeldenummer: 19208318.6
(22) Anmeldetag: 11.11.2019
(51) Int. Cl.: B64C 27/08, B64C 27/20, B64C 39/00, H02K 9/06, B64D 33/08, B64C 39/02

(54) **ANTRIEBSEINHEIT FÜR EIN FLUGGERÄT UND VERFAHREN ZUM KÜHLEN EINER ANTRIEBSEINHEIT**

(71) Anmelder: mdGroup Germany GmbH, 57072 Siegen (DE)
(72) Erfinder: Brüggerhoff, Frank, 57223 Kreuzta (DE); Cernohorský, Richard, 57078 Siegen (DE)
(74) Vertreter: Glawe, Delfs, Moll

(57) **Zusammenfassung**

Antriebseinheit für ein Fluggerät, mit einem Elektromotor (23) und mit einem Motorgehäuse (21), das sich in Umfangsrichtung um den Elektromotor (23) herum erstreckt, und mit einem von dem Elektromotor (23) angetriebenen Propeller (19). Ein Gehäusedeckel (22) dreht sich mit dem Propeller (19). Der Gehäusedeckel (22) hat eine Ausdehnung in Radialrichtung (32), die größer ist als die Ausdehnung des Motorgehäuses (21) in Radialrichtung (32). Der Gehäusedeckel (22) ist mit einer Kühlrippe (37) versehen. Ein proximales Ende (38) der Kühlrippe (37) ist in Radialrichtung (32) innerhalb des Motorgehäuses (21) und ein distales Ende (39) der Kühlrippe (37) in Radialrichtung (32) außerhalb des Motorgehäuses (21) angeordnet. Die Erfindung betrifft außerdem ein Verfahren zum Kühlen einer Antriebseinheit für ein Fluggerät.

## Beschreibung

Die Erfindung betrifft eine Antriebseinheit für ein Fluggerät. Die Antriebseinheit umfasst einen Elektromotor und einen von dem Elektromotor angetriebenen Propeller. Die Erfindung betrifft außerdem ein Verfahren zum Kühlen einer solchen Antriebseinheit.

Bei Antriebseinheiten von Fluggeräten ist eine hohe Leistung bei geringem Gewicht wünschenswert. Je kompakter eine Antriebseinheit gebaut wird, desto schwieriger wird es, die im Betrieb der Antriebseinheit entstehende Wärme zuverlässig abzuführen.

Der Erfindung liegt die Aufgabe zugrunde, eine Antriebseinheit für ein Fluggerät vorzustellen, die mit einer wirksamen Kühlung ausgestattet ist. Die Aufgabe wird gelöst mit den Merkmalen der unabhängigen Ansprüche. Vorteilhafte Ausführungsformen sind in den Unteransprüchen angegeben.

Die erfindungsgemäße Antriebseinheit umfasst einen Elektromotor und ein Motorgehäuse, das sich in Umfangsrichtung um den Elektromotor herum erstreckt. Der Elektromotor treibt einen Propeller an. Ein Gehäusedeckel dreht sich mit dem Propeller, wobei der Gehäusedeckel eine Ausdehnung in Radialrichtung hat, die größer ist als die Ausdehnung des Motorgehäuses in Radialrichtung. Der Gehäusedeckel ist mit einer Kühlrippe versehen. Ein proximales Ende der Kühlrippe ist in Radialrichtung innerhalb des Motorgehäuses und ein distales Ende der Kühlrippe in Radialrichtung außerhalb des Motorgehäuses angeordnet.

Mit der Erfindung wird der mit dem Propeller rotierende Gehäusedeckel genutzt, um einen Luftstrom in Bewegung zu setzen. Mit dem Luftstrom wird Wärme von der Antriebseinheit abgeführt. Die Erfindung hat erkannt, dass mit einer Kühlrippe, die sich von dem Innenraum des Motorgehäuses kommend über den Rand des Motorgehäuses hinaus nach außen erstreckt, eine wirksame Wärmeabfuhr aus dem Innenraum des Motorgehäuses möglich ist.

Durch die Drehachse des Propellers werden eine Axialrichtung und eine Radialrichtung der Antriebseinheit definiert. In einem Normalzustand der Antriebseinheit kann die Drehachse des Propellers eine im Wesentlichen senkrechte Ausrichtung haben. Alle nachfolgenden Richtungsangaben beziehen sich auf diesen Normalzustand der Antriebseinheit. Im Normalzustand der Antriebseinheit kann der Propeller oberhalb des Elektromotors angeordnet sein.

Der Elektromotor kann einen Stator umfassen, der mit einer Tragstruktur der Antriebseinheit verbunden ist. Der Propeller kann mit einem Rotor des Elektromotors verbunden sein. Der Elektromotor kann ein bürstenloser Gleichstrommotor (BLDC) sein. Der Elektromotor kann als Innenläufer oder als Außenläufer ausgestaltet sein. Bei einem Innenläufer bildet ein radial innen liegender Teil des Elektromotors den Rotor und ein radial außen liegender Teil des Elektromotors den Stator. Bei einem Außenläufer ist es umgekehrt.

Der Gehäusedeckel kann in Axialrichtung zwischen dem Elektromotor und dem Propeller angeordnet sein. Die Kühlrippe kann auf der dem Elektromotor zugewandten Seite des Gehäusedeckels angeordnet sein.

Das Motorgehäuse kann ein von dem Elektromotor separates Gehäuse sein, in das der Elektromotor eingesetzt wird. Möglich ist auch, dass das Motorgehäuse ein integraler Bestandteil des Elektromotors ist. Bei einem Innenläufer kann das Motorgehäuse durch eine Außenwand des Stators oder eine den Stator begrenzende Schale gebildet werden. Bei einem Außenläufer kann das Motorgehäuse durch eine Außenwand des Rotors oder eine den Rotor begrenzende Schale gebildet werden. Bei dieser Ausführungsform dreht das Motorgehäuse sich mit dem Gehäusedeckel. In allen Fällen definiert das Motorgehäuse eine den Elektromotor umgebene Struktur, aus dessen Innenraum die Wärme abgeführt wird.

Das Motorgehäuse kann eine obere Abschlusskante haben, die sich um die Drehachse herum erstreckt. Die Abschlusskante kann in einer Ebene angeordnet sein, die einen rechten Winkel mit der Drehachse einschließt. Die Abschlusskante kann sich kreisförmig erstrecken, so dass mit der Abschlusskante eine kreisförmige Kontur des Motorgehäuses aufgespannt wird. Die Abschlusskante kann konzentrisch zu der Drehachse ausgerichtet sein. Der radiale Abschnitt zwischen der Drehachse und der Abschlusskante entspricht dem Innenraum des Motorgehäuses. Radial außerhalb der Abschlusskante liegt der Außenraum des Motorgehäuses.

Der Gehäusedeckel kann eine geschlossene Abdeckung bilden, so dass kein Luftstrom durch den Gehäusedeckel hindurch in den Innenraum des Motorgehäuses eintreten kann oder aus diesem austreten kann. Das Motorgehäuse kann ebenfalls eine geschlossene Abdeckung in Umfangsrichtung um den Elektromotor herum bilden, so dass kein Luftstrom durch das Motorgehäuse hindurch in den Innenraum des Motors eintreten kann oder aus diesem austreten kann. Eine Eintrittsöffnung für den Kühlluftstrom kann in Axialrichtung unterhalb des Elektromotors in dem Motorgehäuse angeordnet sein.

Zwischen der Abschlusskante des Motorgehäuses und dem Gehäusedeckel kann ein umlaufender Spalt ausgebildet sein, innerhalb dessen die Kühlrippe angeordnet ist. Die Kühlrippe bewegt sich relativ zu der Abschlusskante, wenn der Propeller sich dreht.

Der Elektromotor kann eine dem Gehäusedeckel zugewandte obere Abschlussfläche haben. Die Kühlrippe des Gehäusedeckels kann auf der oberen Abschlussfläche des Elektromotors aufliegen oder einen geringen axialen Abstand zu der oberen Abschlussfläche haben, der vorzugsweise nicht größer ist als 2 mm, weiter vorzugsweise nicht größer ist als 1 mm. Die obere Abschlussfläche kann an dem Rotor des Elektromotors angeordnet sein.

Die obere Abschlussfläche des Elektromotors kann mit einer oder mehreren Durchbrechungen für einen Kühlluftstrom versehen sein. Die Durchbrechungen können Bestandteil eines Kühlkanals sein, der sich zwischen dem oberen Ende und dem unteren Ende des Elektromotors erstreckt.

Der Rotor des Elektromotors kann eine Umfangsfläche haben, die sich als geschlossene Abdeckung über den Umfang des Rotors erstreckt, so dass kein Luftstrom durch die Umfangsfläche hindurchtreten kann. Die Umfangsfläche kann in einem geringen radialen Abstand zu der Abschlusskante eines als separates Teil augestalteten Motorgehäuses angeordnet sein. Der radiale Abstand kann beispielsweise kleiner sein als 5 mm, vorzugsweise kleiner sein als 2 mm. In Axialrichtung kann die Umfangsfläche des Rotors geringfügig nach oben über die Abschlusskante des Motorgehäuses hinausragen, vorzugsweise um nicht mehr als 5 mm, weiter vorzugsweise um nicht mehr als 2 mm.

Die Kühlrippe kann in einem axialen Abschnitt der Antriebseinheit angeordnet sein, der zwischen der oberen Abschlussfläche des Rotors und dem die Abdeckung bildenden Teil des Gehäusedeckels liegt. Ein peripherer Abschnitt des Gehäusedeckels kann nach unten gezogen sein, so dass die Kühlrippe in Radialrichtung abgedeckt ist. Dabei kann der periphere Abschnitt des Gehäusedeckels eine über den Umfang geschlossene Abdeckung bilden. Die Kühlrippe kann so gestaltet sein, dass sie nicht nach unten über den unteren Abschluss des Gehäusedeckels hinausragt. Die Abschlusskante des Motorgehäuses kann in Axialrichtung mit dem unteren Abschluss des Gehäusedeckels abschließen oder überlappen. Es gibt dann eine seitliche Abdeckung für den Elektromotor, die sich über die gesamte Höhe des Elektromotors erstreckt, was von Vorteil ist, um das Eindringen von Verunreinigungen oder Feuchtigkeit zu verhindern.

Der Übergang zwischen dem zentralen Bereich des Gehäusedeckels und dem unteren Abschluss kann kontinuierlich gestaltet sein, so dass es mit anderen Worten zwischen dem unteren Abschluss und dem zentralen Bereich des Gehäusedeckels keine scharfe Kante gibt. Damit kann der aus dem Motorgehäuse austretende Kühlluftstrom nach unten umgelenkt werden, so dass er bereits eine annähernd gleiche Richtung hat wie der von dem Propeller erzeugte Luftstrom. Störende Verwirbelungen bei der Vereinigung der beiden Luftströme können auf diese Weise reduziert werden.

Die Tragstruktur der Antriebseinheit, an die der Elektromotor angeschlossen ist, kann mit Durchbrechungen versehen sein, so dass ein Kühlluftstrom in axialer Richtung durch die Tragstruktur hindurchtreten kann. Das Gehäuse der Antriebseinheit kann eine unterhalb der Tragstruktur angeordnete Eintrittsöffnung haben, durch die ein Luftstrom in den Innenraum der Antriebseinheit eintreten kann. Die Antriebseinheit kann einen Luftkanal umfassen, der sich von der Eintrittsöffnung durch die Tragstruktur hindurch, durch den Elektromotor hindurch bis zu der Kühlrippe erstreckt. Wird der Luftstrom mit der Kühlrippe nach außen abgeführt, so kann ein kontinuierlicher kühlender Luftstrom entlang diesem Luftkanal erzeugt werden.

Zwischen der Tragstruktur der Antriebseinheit und der Eintrittsöffnung kann eine Steuereinheit für den Elektromotor angeordnet sein. Die elektrische Leistung, die dem Elektromotor beispielsweise von einer Batterie zugeführt wird, kann durch die Steuereinheit hindurch geführt werden und/oder mit der Steuereinheit eingestellt werden. Die Steuereinheit kann eine im Innenraum der Antriebseinheit angeordnete Leiterplatte umfassen. Die Steuereinheit hat vorzugsweise eine kleinere radiale Ausdehnung als der von dem Gehäuse umschlossene Innenraum der Antriebseinheit, so dass zwischen der Steuereinheit und der Gehäusewand ein Ringspalt bleibt, durch den der Luftstrom hindurchtreten kann. Der Ringspalt kann einen Teil des durchgehenden Luftkanals bilden. Auf diese Weise kann auch die Steuereinheit gekühlt werden, was insbesondere von Vorteil ist, wenn die Steuereinheit mit Leistungselektronik ausgestattet ist. Die Antriebseinheit kann eine elektrische Leitung zwischen der Steuereinheit und dem Elektromotor umfassen, die sich durch eine Durchbrechung der Tragstruktur hindurch erstreckt. Die Durchbrechung der Tragstruktur kann demnach eine Doppelfunktion haben als Bestandteil des Kühlluftkanals und als Durchlass für elektrische Leitungen.

Betrachtet man die radiale Erstreckung des Gehäusedeckels zwischen der Drehachse und dem peripheren Abschluss, so ist der Abstand zwischen der Drehachse des Rotors und dem proximalen Ende der Kühlrippe vorzugsweise nicht größer als 50 %, weiter vorzugsweise nicht größer als 30 %, weiter vorzugsweise nicht größer als 10 % des radialen Abstand zwischen der Drehachse und dem peripheren Abschluss des Gehäusedeckels. Das distale Ende der Kühlrippe kann bis zum peripheren Ende des Gehäusedeckels geführt sein. Die Kühlrippe kann einen distalen Abschnitt umfassen, der weiter nach unten geführt ist als ein proximaler Abschnitt der Kühlrippe. Der distale Abschnitt der Kühlrippe ist vorzugsweise radial außerhalb der oberen Abschlusskante des Motorgehäuses angeordnet.

Die Kühlrippe kann sich geradlinig in Radialrichtung und/oder geradlinig in Axialrichtung erstrecken. Eine solche Kühlrippe kann für beide Drehrichtungen verwendet werden, so dass bei Fluggeräten mit rechtslaufenden und linkslaufenden Motoren einheitliche Gehäusedeckel verwendet werden können.

Für die Kühlwirkung kann es von Vorteil sein, wenn die Kühlrippe sich in Radialrichtung entlang einem geschwungenen Weg erstreckt. Zusätzlich oder alternativ dazu kann es von Vorteil sein, wenn die Kühlrippe in Axialrichtung geneigt und/oder gebogen ist. Möglich ist auch eine Kühlrippe, die sich in Radialrichtung verwindet. Bei solchen Kühlrippen kann ein Satz von zwei Gehäusedeckeln vorgesehen sein, wobei die Kühlrippe des ersten Gehäusedeckels bezogen auf die Drehrichtung spiegelbildlich zu der Kühlrippe des zweiten Gehäuses ausgebildet ist. Einer der Gehäusedeckel kann für eine rechtslaufende Antriebseinheit bestimmt sein, der andere Gehäusedeckel für eine linkslaufenden Antriebseinheit. Damit wird es möglich, für rechtslaufende und linkslaufende Antriebseinheiten eine gleichmäßige Kühlwirkung zu erzielen.

Der Gehäusedeckel kann eine Mehrzahl von Kühlrippen aufweisen, wobei die Kühlrippen vorzugsweise zueinander identisch geformt sind. Die Kühlrippen können über den Umfang des Gehäusedeckels verteilt sein, vorzugsweise über den Umfang des Gehäusedeckels gleichverteilt sein. Die Anzahl der Kühlrippen kann beispielsweise zwischen 10 und 40, vorzugsweise zwischen 20 und 30 liegen.

Die Erfindung betrifft auch ein mit einer solchen Antriebseinheit ausgestattetes Fluggerät. Das Fluggerät kann eine Mehrzahl von solchen Antriebseinheiten umfassen, insbesondere zwei, vier, sechs oder acht Antriebseinheiten. Das Fluggerät kann ein unbemanntes Fluggerät sein. Das Fluggerät kann eine Nutzlast zwischen 0,3 kg und 50 kg haben.

Die Erfindung betrifft außerdem ein Verfahren zum Kühlen einer Antriebseinheit eines Fluggeräts, bei dem ein Gehäusedeckel der Antriebseinheit in Rotation versetzt wird, um einen Kühlluftstrom durch ein Motorgehäuse der Antriebseinheit anzutreiben. Der Gehäusedeckel hat eine Ausdehnung in Radialrichtung, die größer ist als die Ausdehnung des Motorgehäuses in Radialrichtung, wobei der Gehäusedeckel mit einer Kühlrippe versehen ist, und wobei ein proximales Ende der Kühlrippe in Radialrichtung innerhalb des Motorgehäuses und ein distales Ende der Kühlrippe in Radialrichtung außerhalb des Motorgehäuses angeordnet ist.

Das Verfahren kann mit weiteren Merkmalen fortgebildet werden, die im Zusammenhang der erfindungsgemäßen Antriebseinheit beschrieben sind. Die Antriebseinheit kann mit weiteren Merkmalen fortgebildet werden, die im Zusammenhang des erfindungsgemäßen Verfahrens beschrieben sind.

Die Erfindung wird nachfolgend unter Bezugnahme auf die beigefügten Zeichnungen anhand vorteilhafter Ausführungsformen beispielhaft beschrieben. Es zeigen:
- Fig. 1:: ein erfindungsgemäßes Fluggerät;
- Fig. 2:: eine erfindungsgemäße Antriebseinheit;
- Fig. 3:: eine Ansicht von oben auf das Motorgehäuse der Antriebseinheit aus Fig. 2
- Fig. 4:: eine Explosionsansicht der Antriebseinheit aus Fig. 2;
- Fig. 5:: eine vergrößerte Darstellung des Gehäusedeckels der Antriebseinheit aus Fig. 2;
- Fig. 6-8:: den Gehäusedeckel aus Fig. 4 in anderen Perspektiven;
- Fig. 9-20:: weitere Ausführungsformen von erfindungsgemäßen Gehäusedeckeln in jeweils zwei verschiedenen Ansichten;
- Fig. 21: eine Schnittdarstellung der Antriebseinheit auf Fig. 2.

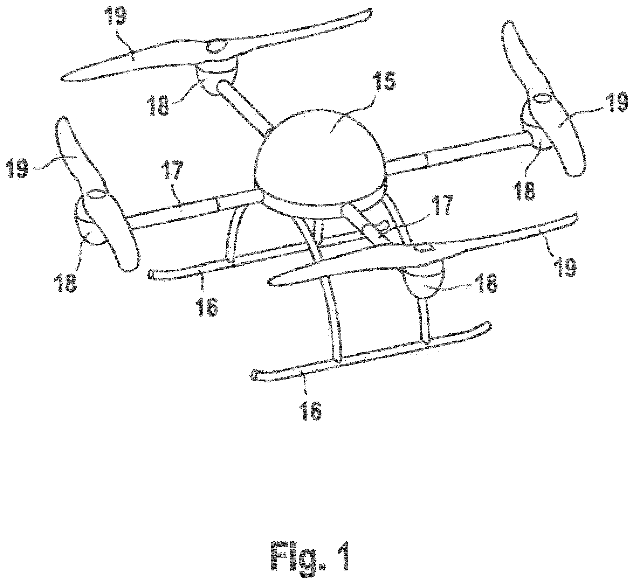

Ein in Fig. 1 gezeigtes Fluggerät in Form einer unbemannten Drohne umfasst einen Rumpfkörper 15 mit Kufen 16, auf denen das Fluggerät steht, wenn es am Boden ist. Von dem Rumpfkörper 15 erstrecken sich vier Tragstreben 17 nach außen. Am äußeren Ende jeder Tragstrebe 17 ist eine Antriebseinheit 18 zum Antrieb eines Propellers 19 angeordnet. Zum Start werden die Rotoren 19 in gegenläufige Drehung versetzt, so dass das Fluggerät senkrecht nach oben abhebt. Durch geeignete Ansteuerung der Antriebseinheiten 19 kann das Fluggerät gezielt entlang gewünschter Flugbahnen gesteuert werden.

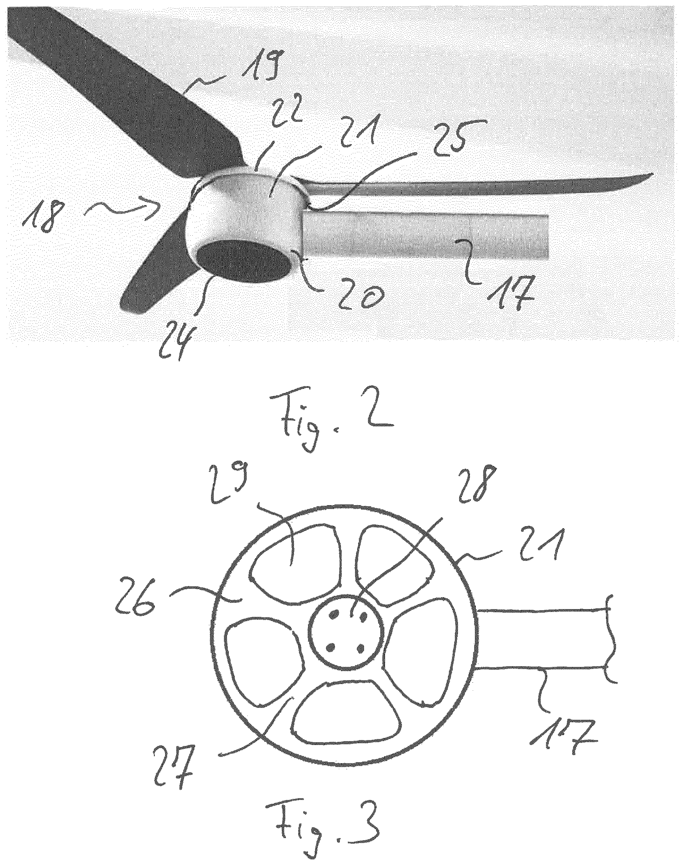

In der vergrößerten Darstellung gemäß Fig. 2 hat die Antriebseinheit 18, die in diesem Ausführungsbeispiel mit einem dreiblättrigen Propeller 19 ausgestattet ist, ein Gehäuse 20 das einen in Fig. 2 nicht sichtbaren Elektromotor 23 umschließt. Der Elektromotor 23 ist im oberen Abschnitt der Antriebseinheit angeordnet, so dass der obere Abschnitt des Gehäuses 20 zugleich ein Motorgehäuse 21 bildet.

Nach oben hin ist die Antriebseinheit 18 mit einem Gehäusedeckel 22 abgedeckt. Der Gehäusedeckel 22 ist mit dem Propeller 19 verbunden und dreht sich relativ zu dem Motorgehäuse 21, wenn die Antriebseinheit in Betrieb ist.

Das untere Ende der Antriebseinheit 18 ist als Eintrittsöffnung 24 gestaltet. Die Eintrittsöffnung 24 ist mit einem Schutzgitter versehen. Die Antriebseinheit 18 bildet einen Luftkanal, der sich von der Eintrittsöffnung 24 durch den Innenraum des Gehäuses 20 bis zu einem zwischen dem Motorgehäuse 21 und dem Gehäusedeckel 22 ausgebildeten umlaufenden Spalt in Form eines Ringspalts 25 erstreckt. Der Luftstrom tritt durch die Eintrittsöffnung 24 in die Antriebseinheit 18 ein und verlässt die Antriebseinheit 18 durch den Ringspalt 25.

Im Inneren des Gehäuses 20 ist eine Tragstruktur 26 ausgebildet, die sich mit fünf Streben 27 vom Umfang des Gehäuses 20 bis zu einem Mittelteil 28 erstreckt. Die Streben 27 schließen Durchbrechungen 29 zwischen sich ein, durch die der Luftstrom zwischen der Eintrittsöffnung 24 und dem Ringspalt 25 hindurchtritt. Das Mittelteil 28 ist stabil an die Tragstrebe 17 angebunden.

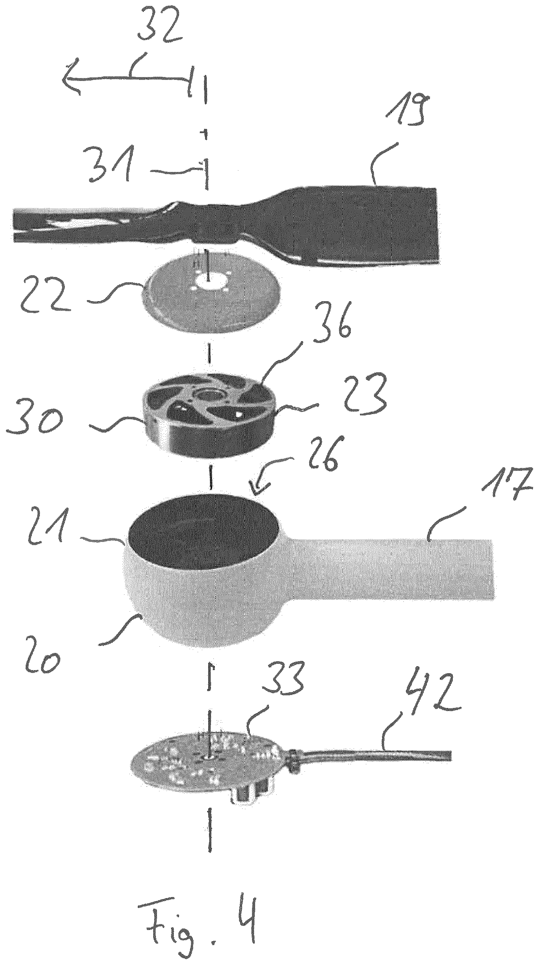

Das Mittelteil 28 ist mit vier Bohrungen versehen, über die der Elektromotor 23 mit der Tragstruktur 26 verschraubt wird. Der Elektromotor 23 ist gemäß Figur 4 ein bürstenloser Gleichstrommotor (BLDC), dessen Stator mit der Tragstruktur 26 verschraubt wird. Der Propeller 19 wird zusammen mit dem Gehäusedeckel 22 über vier Schrauben mit dem Rotor 30 des Elektromotors 23 verbunden. Der Rotor 30 ist mit Durchbrechungen 36 versehen, die einen Luftstrom in Axialrichtung 31 durch den Rotor 30 hindurch zulassen. Die Antriebseinheit 18 definiert eine Drehachse 31, um die sich der Rotor 19 dreht und relativ zu der sich der Rotor in radialer Richtung 32 erstreckt.

Im unteren Abschnitt des Gehäuses 20 unterhalb der Tragstruktur 26 ist eine Steuereinheit 33 angeordnet, die auf einer Leiterplatte angeordnete Leistungselektronik umfasst. Die elektrischen Anschlüsse 42 der Steuereinheit 33 sind im montierten Zustand der Antriebseinheit 18 im Inneren der Tragstrebe 17 geführt. Die Steuereinheit 33 wird von unten an der Tragstruktur 26 der Antriebseinheit 18 befestigt.

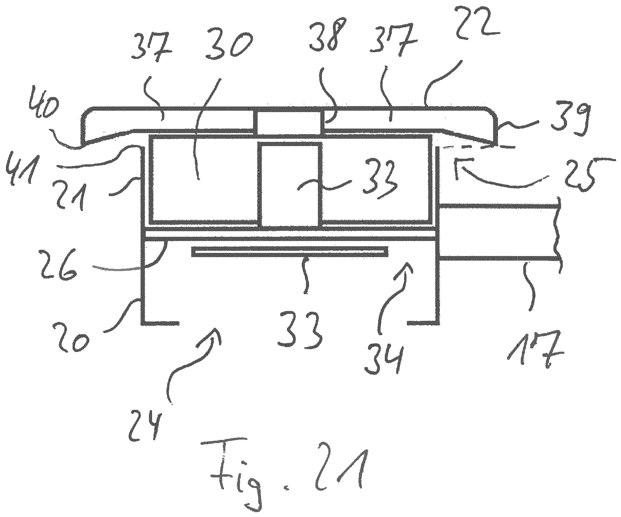

Der Durchmesser der Steuereinheit 33 ist kleiner als der Innendurchmesser des Gehäuses 20, so dass im montierten Zustand ein ringförmiger Durchlass 34 zwischen der Steuereinheit 33 und dem Gehäuse 20 besteht, siehe Schnittdarstellung in Fig. 21. Der Luftstrom zwischen der Eintrittsöffnung 24 und dem Ringspalt 25 tritt durch den ringförmigen Durchlass 34 hindurch.

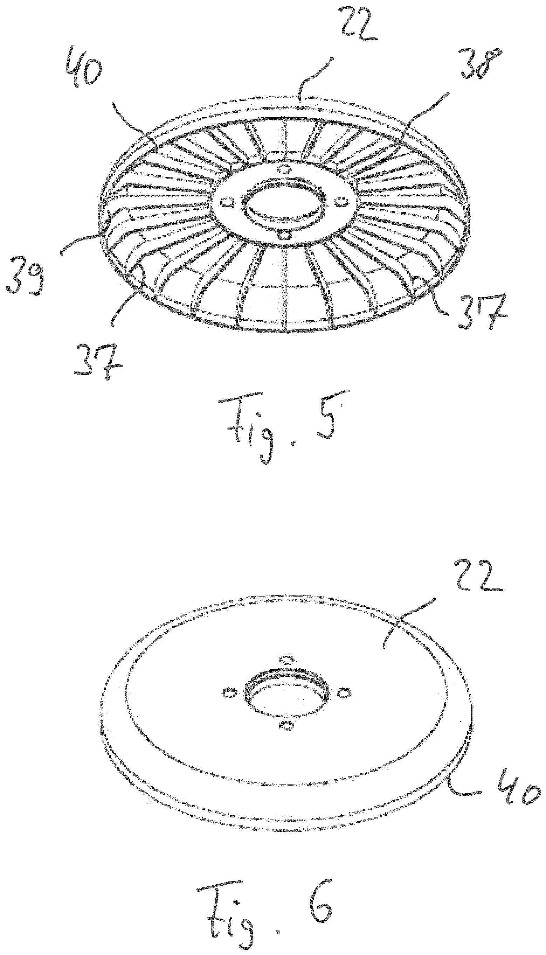

Der Gehäusedeckel 22 ist gemäß Fig. 5 mit einer Vielzahl von Kühlrippen 37 versehen, die sich von einem Mittelteil des Gehäusedeckels 22 in radialer Richtung 32 bis zum peripheren Ende des Gehäusedeckels 22 erstrecken. Durch Rotation des Gehäusedeckels 22 wird ein Luftstrom in Richtung des peripheren Endes des Gehäusedeckels 22 angetrieben, der durch den Ringspalt 25 aus dem Motorgehäuse 21 austritt. Es bildet sich ein durchgehender Luftstrom von der Eingangsöffnung 24 über den ringförmigen Durchlass 34, durch die Tragstruktur 26 hindurch, durch den Rotor 30 des Elektromotors 23 hindurch über die Zwischenräume zwischen den Kühlrippen 37 bis zu dem Ringspalt 25. mit diesem Luftstrom wird Wärme von der Steuereinheit 33 und dem Elektromotor 23 abgeführt und für eine wirksame Kühlung dieser Komponenten gesorgt.

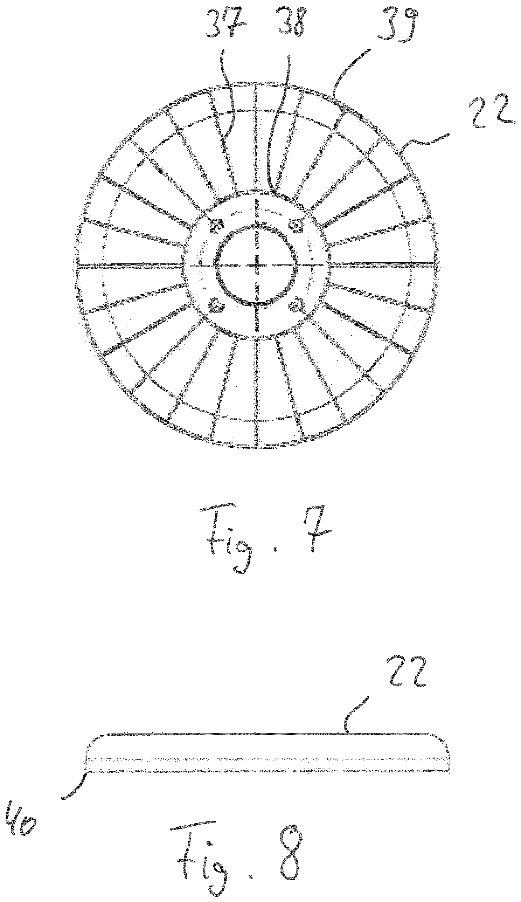

Bei der Ausführungsform gemäß Fig. 5 erstrecken die Kühlrippen 37 sich geradlinig in Radialrichtung 32 und geradlinig in Axialrichtung 31, siehe Fig. 7. Die Kühlrippen sind symmetrisch bezogen auf die Drehrichtung, so dass der Gehäusedeckel 22 für rechtsdrehende und linksdrehende Elektromotoren 23 verwendet werden kann. Die Kühlrippen 37 haben einen proximalen Abschnitt (angrenzend an das proximale Ende 38 der Kühlrippe 37), in dem die Unterkante der Kühlrippe 37 sich in Radialrichtung 32 (also rechtwinklig zur Axialrichtung 31) erstreckt. Ein an das distale Ende 39 angrenzender distaler Abschnitt der Kühlrippe 37 hat eine größere Ausdehnung nach unten. Der distale Abschnitt endet radial außerhalb des Motorgehäuses 21. Zusammen mit der am peripheren Ende 40 nach unten umgelenkten Kontur des Gehäusedeckels 22 lenkt der distale Abschnitt der Kühlrippe 37 den Luftstrom nach unten um. Der Luftstrom kann sich ohne größere Verwirbelungen mit dem nach unten gerichteten Luftstrom des Propellers 19 vereinigen.

Das periphere Ende 40 des Gehäusedeckels 22 ist, wie in der Schnittdarstellung in Fig. 21 mit einer gestrichelten Linie angedeutet ist, soweit nach unten gezogen, dass es bezogen auf die Axialrichtung 31 mit der Abschlusskante 41 des Motorgehäuses 21 abschließt. Die Antriebseinheit 18 ist damit vor dem Eindringen von Verunreinigungen geschützt.

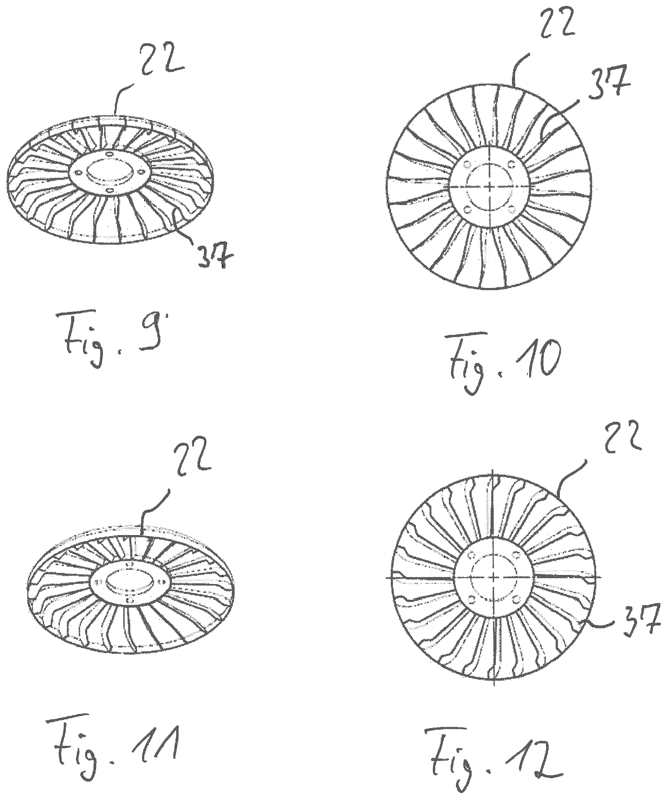

Für die Gestaltung der Kühlrippen 37 gibt es verschiedene Varianten. In Fig. 9-10 sind Kühlrippen 37 gezeigt, die sich in Radialrichtung entlang einem geschwungenen Weg erstrecken und die zudem in sich verwunden sind. Dies verbessert die Kühlleistung, wenn der Gehäusedeckel 22 mit der richtigen Drehrichtung betrieben wird. Für die entgegengesetzte Drehrichtung ist eine spiegelbildliche Gestaltung der Kühlrippe 37 erforderlich. Dies gilt für alle nachfolgend beschriebenen Ausführungsformen von Gehäusedeckeln 22.

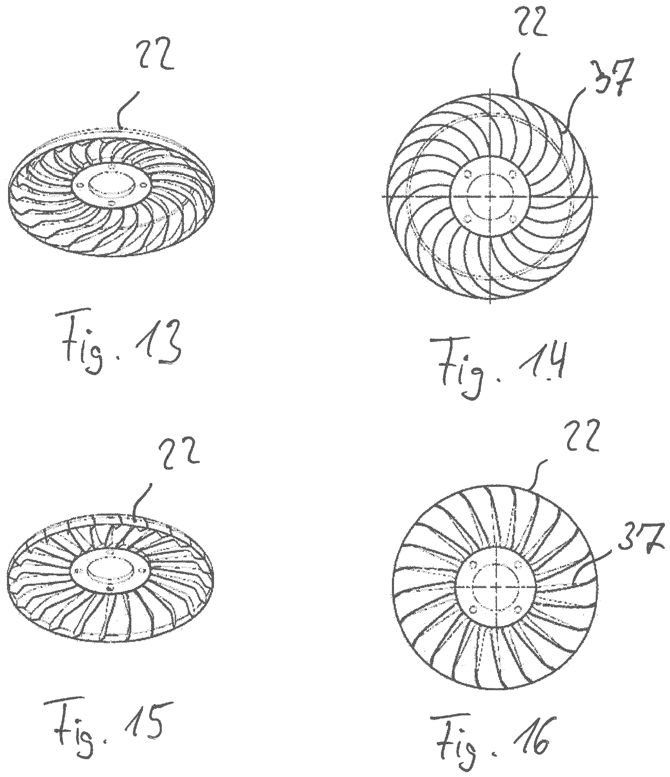

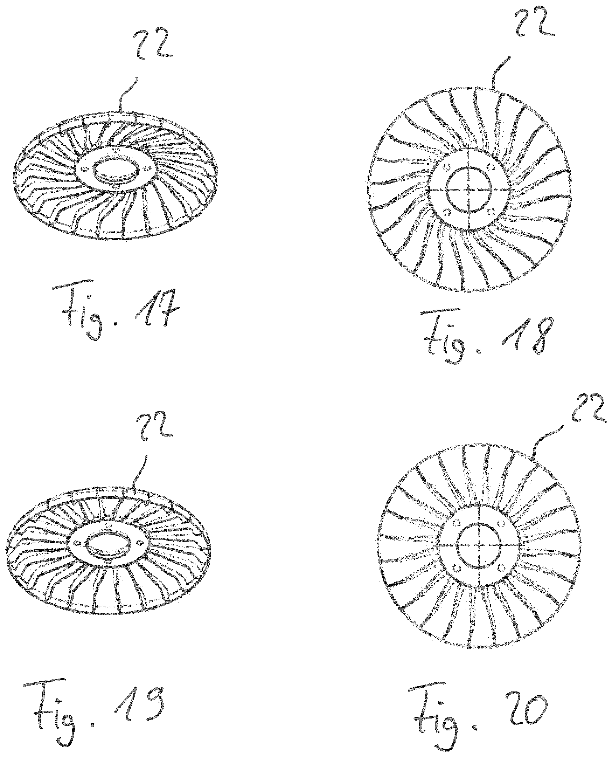

In den Fig. 10-11 sind die Kühlrippen 37 in sich eben, aber zur Seite geneigt. In Fig. 13-14 erstrecken sich die Kühlrippen 37 in Axialrichtung geradlinig und in Radialrichtung entlang einem gebogenen Weg. Die Fig. 15-16, 17-18, 19-20 zeigen weitere Varianten von Kühlrippen 37, die in sich verwunden sind und/oder sich entlang von geschwungenen Wegen in Radialrichtung erstrecken.

## Patentansprüche

1. Antriebseinheit für ein Fluggerät, mit einem Elektromotor (23) und mit einem Motorgehäuse (21), das sich in Umfangsrichtung um den Elektromotor (23) herum erstreckt, mit einem von dem Elektromotor (23) angetriebenen Propeller (19), mit einem Gehäusedeckel (22), der sich mit dem Propeller (19) dreht, wobei der Gehäusedeckel (22) eine Ausdehnung in Radialrichtung (32) hat, die größer ist als die Ausdehnung des Motorgehäuses (21) in Radialrichtung (32), wobei der Gehäusedeckel (22) mit einer Kühlrippe (37) versehen ist, und wobei ein proximales Ende (38) der Kühlrippe (37) in Radialrichtung (32) innerhalb des Motorgehäuses (21) und ein distales Ende (39) der Kühlrippe (37) in Radialrichtung (32) außerhalb des Motorgehäuses (21) angeordnet ist.

2. Antriebseinheit nach Anspruch 1, **dadurch gekennzeichnet, dass** der Gehäusedeckel (22) bezogen auf eine Axialrichtung (31) der Antriebseinheit zwischen dem Propeller (19) und dem Elektromotor (23) angeordnet ist.

3. Antriebseinheit nach Anspruch 1 oder 2, **dadurch gekennzeichnet, dass** die Kühlrippe (37) auf einer dem Elektromotor (23) zugewandten Seite des Gehäusedeckels (22) angeordnet ist.

4. Antriebseinheit nach einem der Ansprüche 1 bis 3, **dadurch gekennzeichnet, dass** zwischen einer Abschlusskante (41) des Motorgehäuses (21) und dem Gehäusedeckel (22) ein umlaufender Spalt (25) ausgebildet ist und dass die Kühlrippe (37) innerhalb des umlaufenden Spaltes (25) angeordnet ist.

5. Antriebseinheit nach einem der Ansprüche 1 bis 4, **dadurch gekennzeichnet, dass** der Elektromotor (23) einen Rotor (30) umfasst und dass eine dem Propeller (19) zugewandte Abschlussfläche des Rotors (30) mit einer Durchbrechung (36) für einen Kühlluftstrom versehen ist.

6. Antriebseinheit nach einem der Ansprüche 1 bis 5, **dadurch gekennzeichnet, dass** ein peripherer Abschnitt des Gehäusedeckels (22) nach unten gezogen ist, so dass die Kühlrippe (37) in Radialrichtung (32) abgedeckt ist.

7. Antriebseinheit nach einem der Ansprüche 4 bis 7, **dadurch gekennzeichnet, dass** die Abschlusskante (41) des Motorgehäuses (21) in Axialrichtung (31) mit dem unteren Abschluss (40) des Gehäusedeckels (22) abschließt oder überlappt.

8. Antriebseinheit nach einem der Ansprüche 1 bis 7, **dadurch gekennzeichnet, dass** der Gehäusedeckel (22) dazu ausgelegt ist, einen aus dem Motorgehäuse (21) austretenden Kühlluftstrom nach unten umzulenken.

9. Antriebseinheit nach einem der Ansprüche 1 bis 8, **dadurch gekennzeichnet, dass** der Elektromotor (23) mit einer Tragstruktur (26) der Antriebseinheit verbunden ist und dass die Tragstruktur (26) mit Durchbrechungen (29) für einen Kühlluftstrom versehen ist.

10. Antriebseinheit nach Anspruch 9, **gekennzeichnet durch** einen Luftkanal, der sich von einer unterhalb der Tragstruktur (26) angeordneten Eintrittsöffnung (24) durch die Tragstruktur (26) hindurch und durch den Elektromotor (23) hindurch zu der Kühlrippe (37) erstreckt.

11. Antriebseinheit nach Anspruch 10, **dadurch gekennzeichnet, dass** der Luftkanal sich durch einen Ringspalt (34) erstreckt, der zwischen einer Steuereinheit (33) und einem Gehäuse (20) der Antriebseinheit angeordnet ist.

12. Antriebseinheit nach einem der Ansprüche 1 bis 11, **dadurch gekennzeichnet, dass** der Gehäusedeckel (22) eine Mehrzahl von Kühlrippen (37) aufweist.

13. Verfahren zum Kühlen einer Antriebseinheit eines Fluggeräts, bei dem ein Gehäusedeckel (22) der Antriebseinheit in Rotation versetzt wird, um einen Kühlluftstrom durch ein Motorgehäuse (21) der Antriebseinheit anzutreiben, wobei der Gehäusedeckel (22) eine Ausdehnung in Radialrichtung (32) hat, die größer ist als die Ausdehnung des Motorgehäuses (21) in Radialrichtung (32), wobei der Gehäusedeckel (22) mit einer Kühlrippe (37) versehen ist, und wobei ein proximales Ende (38) der Kühlrippe (37) in Radialrichtung (32) innerhalb des Motorgehäuses (21) und ein distales Ende (39) der Kühlrippe (37) in Radialrichtung (32) außerhalb des Motorgehäuses (21) angeordnet ist.
